# EUROPÄISCHE PATENTSCHRIFT

(11) **EP 0 990 384 B1**
(45) Veröffentlichungstag und Bekanntmachung des Hinweises auf die Patenterteilung: **26.11.2003**
(21) Anmeldenummer: 99118282.5
(22) Anmeldetag: 15.09.1999
(51) Int. Cl.: A01F 12/28

(54) **Verstelleinrichtung einer landwirtschaftlichen Erntemaschine**
Adjusting arrangement for an agricultural harvesting machine
Mécanisme de réglage pour une machine agricole de récolte

(30) Priorität: 30.09.1998 DE 19844894
(43) Veröffentlichungstag der Anmeldung: 05.04.2000
(73) Patentinhaber: CLAAS Selbstfahrende Erntemaschinen GmbH, 33428 Harsewinkel (DE)
(72) Erfinder: Eis, Günter, 33428 Harsewinkel (DE); Isfort, Heinrich, 48249 Dülmen (DE)

(56) Entgegenhaltungen:
- DE-A- 2 655 119
- DE-A- 19 538 199
- DE-U- 9 107 689
- GB-A- 1 301 363

## Beschreibung

Die Erfindung bezieht sich auf eine Verstelleinrichtung einer landwirtschaftlichen Erntemaschine für innerhalb einer Förderstrecke zusammenwirkende Maschinenteile und/oder Baugruppen, von denen wenigstens ein Maschinenteil bzw. eine Baugruppe mittels Kraftspeichern der Verstelleinrichtung durch verstellbare Anschläge der Verstelleinrichtung zur Veränderung der Durchgangsweiten bzw. -Öffnungen für das Erntegut positioniert ist.

Die in Frage kommende Verstelleinrichtung wird für landwirtschaftliche Erntemaschinen der unterschiedlichsten Bauarten benötigt, beispielsweise für Feldhäcksler, Mähdrescher und dergleichen. Die zueinander einstellbaren Maschinenteile oder Baugruppen können verschiedenartig gestaltet sein. So ist es beispielsweise bei Feldhäckslern notwendig, beim Häckseln von Mais zwei sogenannte Cräckerwalzen so zueinander einzustellen, daß die Maiskörner aufgeschlossen werden. Bei Mähdreschern ist es beispielsweise notwendig, den Dreschkorb einzustellen. Die in Frage kommenden Maschinenteile oder Baugruppen liegen im Normalfall innerhalb einer Förderstrecke für das Erntegut.

Die in Frage kommenden Erntemaschinen sind relativ breit. Deshalb ist es notwendig, daß für jedes Maschinenteil bzw für jede Baugruppe zwei seitlich angeordnete Anschläge notwendig sind Diese Anschläge bestehen bislang aus Schrauben, die aus einem Gewindestück herausgedreht oder hineingedreht werden können, oder aus keilförmigen Segmenten, die indirekt zwischen den ortsfesten und dem verstellbaren Maschinenelement getrieben werden. Üblicherweise sind hierbei die für die Verstellfunktionen notwendigen Maschinenteile in Schwingen, Hebeln und dergleichen angeordnet. Die Einstellung mittels der Schrauben ist nicht nur arbeitsaufwendig, sondern auch noch ungenau, da die Einstellung ohne Zuhilfenahme von Meßwerkzeugen, Lehren oder dergleichen erfolgt. Außerdem ist nicht auszuschließen, daß die die einzustellenden Bauteile tragenden Hebel oder Schwingen einem Verschleiß unterliegen, so daß im Laufe der Zeit die Einstellung äußerst ungenau wird.

Der Erfindung liegt die Aufgabe zugrunde, eine Verstelleinrichtung der eingangs näher beschriebenen Art in konstruktiv einfacher Weise so auszubilden, daß die Einstellung exakt und in äußerst kürzester Zeit durchgeführt werden kann.

So wird in der DE-A-26 55 119 eine Verstelleinrichtung offenbart, die die Spaltbreite zwischen der Dreschtrommel und dem Dreschkorb eines Mähdreschers in Bezug auf die Dreschtrommel einstellbar macht. Hierbei sind an doppeltwirkenden Stellzylindem doppeltwirkende Druckmittelgeber parallel geschaltet und jeweils einem hydropneumatischen Speicher angeschlossen.
Nachteilig an dieser Erfindung wirkt sich die konstruktive Ausführung der mit den Verstelleinrichtungen in Verbindung stehenden Kolbenzylindereinheiten aus. Gemäß der DE-A-26 55 119 sind zwei Druckmittelgeber vier Verstellelementen zugeordnet.

Um eine exakte Einstellung der Verstellelemente zueinander zu erreichen, muss stets die gleiche Menge des Fluids aus den bzw. in die Druckmittelgeber fließen. Demnach muss die Menge, die zu den Verstelleinrichtungen von einem Druckmittelgeber fließt und die Menge der beiden Druckmittelgeber im Verhältnis zueinander identisch sein, um die gleichmäßige Verstellung des Dreschkorbes zu gewährleisten. Diese Feinabstimmung wird in der zugrundeliegenden Erfindung durch eine einzige Mehrkammerpumpe erreicht. Indem innerhalb der Mehrkammerpumpe jeweils eine Kammer jeweils einer Verstelleinrichtung zugeordnet ist, können beliebig viele Verstelleinrichtungen mit einer einzigen Mehrkammerpumpe gleichmäßig verstellt werden. Durch diese Ausführung wird zudem Bauraum eingespart, da neben der Mehrkammerpumpe keine weiteren Verstellmittel erforderlich sind, wodurch gleichfalls die Kosten gering gehalten werden.

Die gestellte Aufgabe wird gelöst, indem die Anschläge durch ein Fluid beaufschlagbare und im Gleichlauf bewegbare in Zylindern geführte Stößel sind, und daß die Steuerung des den Zylindem zuführbaren Fluid durch eine einzige mit den Zylindern strömungsfähig verbundene, mit einem Kolben ausgerüstete Mehrkammerpumpe erfolgt, wobei die Anzahl der Kammern der Mehrkammerpumpe mit der Anzahl der zusteuernden zylinder über stimmt und daß der Kolben derart stufenförmig ausgebildet ist, daß beim Verfahren des Kolbens stets die gleiche Henge des Fluids aus den Kammern aus- bzw. einströmt.

Durch die vorgeschlagene Lösung entfällt nunmehr das genaue Einstellen durch die Schrauben. Die Mehrkammerpumpe ist so ausgelegt, daß allen Zylindern je nach Art der Verstellung die gleiche Menge des Fluid zugeführt wird, oder daß die gleiche Menge von den Zylindern in die Mehrkammerpumpe einströmen kann. Dadurch werden alle ein- oder auszufahrenden Stößel um den gleichen Betrag verfahren, so daß stets eine exakte Einstellung der Maschinenteile bzw. der Baugruppen gegeben ist. Dazu ist es nunmehr nur noch notwendig, die Mehrkammerpumpe entsprechend zu betätigen. Diese kann dann an einer geeigneten Stelle montiert werden, wo sie gut zugänglich ist. Dies ist üblicherweise bei landwirtschaftlichen Erntemaschinen die Fahrerkabine. Als Fluid wird bevorzugt Hydrauliköl eingesetzt. Dadurch ergibt sich eine einfache und besonders langlebige Ausführung.

Eine konstruktiv einfache Lösung für die Mehrkammerpumpe ergibt sich, wenn die Anzahl der Kammern mit der Anzahl der zu steuernden Zylinder übereinstimmt, und daß der Kolben derart stufenförmig ausgebildet ist, daß beim Verfahren des Kolbens stets die gleiche Menge des Fluids aus den Kammern aus- bzw. einströmt Durch eine solche Lösung ist nicht nur das exakte Einstellen der Maschinenteile bzw. Baugruppen gegeben, sondern es wird auch die Anzahl der für die Verstellung notwendigen Bauteile gering gehalten. In einfachster Weise ist es möglich, daß der Kolben der Mehrkammerpumpe von Hand verstellt wird. Dies kann beispielsweise über eine Gewindespindel erfolgen. Es ist jedoch auch möglich, daß dieser mit einem Stelltrieb verstellt wird, der beispielsweise ein elektromotorischer Antrieb, eine gesteuerte Kolbenzylindereinheit oder dergleichen ist. Zweckmäßigerweise ist die Mehrkammerpumpe in der Fahrerkabine der landwirtschaftlichen Erntemaschine installiert und in besonders vorteilhafter Weise ist es mit einer Anzeige für die Größe der Durchgangsweite bzw. der -öffnung versehen. Die die Stößel aufnehmenden Zylinder können verschiedenartig montiert werden. So ist es beispielsweise möglich, daß sie an ortsfesten Bauteilen der landwirtschaftlichen Erntemaschine angeordnet sind, und daß die Stößel auf die verstellbaren Maschinenteile oder Baugruppen direkt oder indirekt einwirken. In sinngemäß umgekehrter Weise ist es auch möglich, daß die die Stößel aufnehmenden Zylinder an den verstellbaren Bauteilen angeordnet sind, und daß die Stößel auf ortsfeste Bauteile der landwirtschaftlichen Erntemaschine einwirken. In besonders bewährter Weise sind die die verstellbaren Bauteile bzw. Baugruppen in der Betriebsstellung haltenden Federn, Zugfedern, Druckfedern oder auch Ausgleichszylinder. Grundsätzlich können alle bekannten Kraftspeicher verwendet werden. Die Federn ermöglichen, daß beispielsweise bei einem erhöhten Durchsatz von Erntegut, das Maschinenteil oder die Baugruppe ausweichen kann.

Je nach Art der Maschinenteile bzw. Baugruppen kann es auch vorteilhaft sein, wenn die Stößel nicht direkt auf das Maschinenteil oder auf die Baugruppe einwirken, sondern daß sie auf einen zweiarmigen Hebel wirken, an dem an einem Ende das zu verstellende Maschinenteil oder die Baugruppe angeschlossen ist, und daß am anderen Ende oder am anderen Endbereich die Feder oder der Ausgleichszylinder angeschlossen ist. Eine solche Anordnung ist vorteilhaft, wenn beispielsweise ein Dreschkorb verstellt werden soll.

Gemäß einer weiteren Ausführung ist vorgesehen, daß die Stößel in geschlossenen Zylindern angeordnet sind und mit Verstellkolben zusammenwirken, an denen ein Ende einer Kolbenstange befestigt ist, deren anderes Ende an dem zu verstellenden Maschinenteil bzw. an der Baugruppe angelenkt sind. Unabhängig von den zuvor geschilderten Ausführungen ist immer vorgesehen, daß die an beiden Seiten des Maschinenteils oder der Baugruppe angeordneten Stößel durch ein Betätigungselement verstellt werden. Da eine landwirtschaftliche Erntemaschine ohnehin mit einem Hydrauliksystem ausgerüstet ist, ist es vorteilhaft, wenn die Verstelleinrichtung als hydraulische Verstelleinheit ausgebildet ist. Diese Verstelleinheit ist dann noch mit Verschraubungen zum Befüllen und Entlüften ausgestattet.

Anhand der beiliegenden Zeichnungen wird die Erfindung noch näher erläutert.

Es zeigen:
- Figur 1: die erfindungsgemäße Verstelleinrichtung in Verbindung mit einem Cräckerwalzenpaar eines Feldhäckslers in einer Seitenansicht,
- Figur 2: eine der Fig. 1 entsprechende Draufsicht,
- Figur 3: die erfindungsgemäße Verstelleinrichtung in Verbindung mit einem zu verstellenden Dreschkorb eines Mähdreschers,
- Figur 4: die Verstelleinrichtung für ein Walzenpaar,
- Figur 5: die Verstellung eines Cräckerwalzenpaares in einer gegenüber der Fig. 1 geänderten Ausführung und stärker schematisiert und
- Figur 6: eine weitere Ausführungsform für die Einstellung eines Cräckerwalzenpaares entsprechend den Fig. 1 und 5.

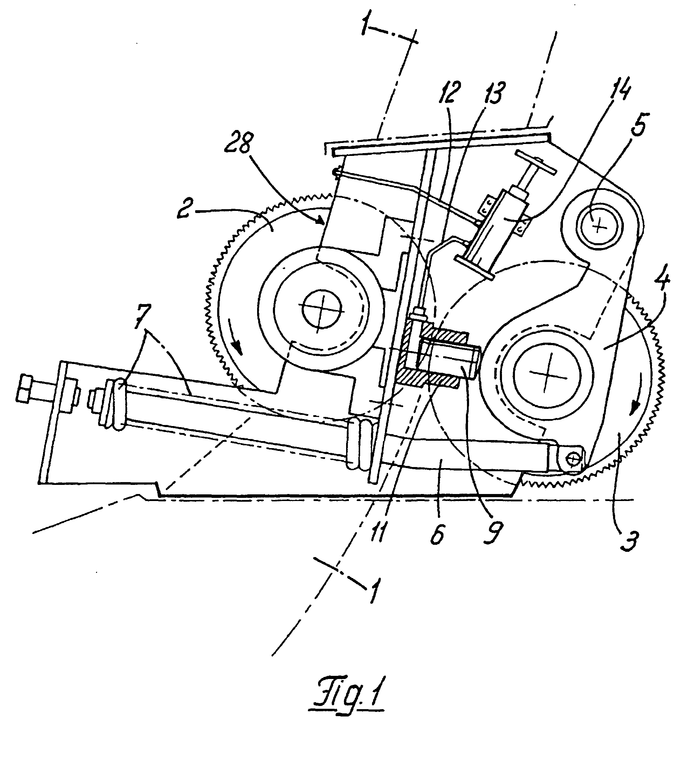

Die in der Fig. 1 dargestellte Anordnung ist für einen bekannten Feldhäcksler ausgelegt. In strichpunktierten Linien ist der die Förderstrecke bildende Förderkanal 1 angedeutet. In diesen Förderkanal 1 ragen zwei Cräckerwalzen, 2, 3 teilweise hinein. Diese Cräckerwalzen werden eingesetzt, wenn der Feldhäcksler zum Ernten von Mais eingesetzt wird. Durch die Cräckerwalzen sollen die Körner aufgeschlossen werden, das heißt teilweise angeschlagen werden. Die Cräckerwalzen 2, 3 werden in nicht näher erläuterter Weise gegensinnig angetrieben. Die in der Darstellung linke Cräckerwalze 2 ist ortsfest gelagert, während die in der Darstellung rechte Cräckerwalze 3 beidseitig in Schwingen 4 gelagert ist, die um eine horizontale Achse 5 schwenkbar ist. Wenn mit dem Feldhäcksler Gras oder dergleichen geerntet wird, wird der Gehäuseblock 28 mit den Cräckerwalzen 2, 3 entnommen und durch ein einfaches, die Förderstrecke schließendes Gehäuse ersetzt. An die seitlichen Schwingen 4 sind Hebel 6 angelenkt. Mittels Zugfedern 7 wird die verstellbare Cräckerwalze 3 in Richtung zur Cräckerwalze 2 gezogen. Der Abstand der Cräckerwalze 3 zur Cräckerwalze 2 und somit auch die Durchgangsweite zwischen diesen beiden Walzen wird durch zwei seitliche Stößel 8, 9 bestimmt, die Anschläge für die Schwingen 4 bilden. Die Stößel 8, 9 sind in Zylindern 10, 11 verschiebbar angeordnet. Diese beiden Zylinder 10, 11 sind über zwei Druckleitungen 12, 13 mit einer Mehrkammerpumpe 14 strömungstechnisch verbunden. Dazu ist die Mehrkammerpumpe 14 mit zwei Anschlüssen 14a und 14b versehen.

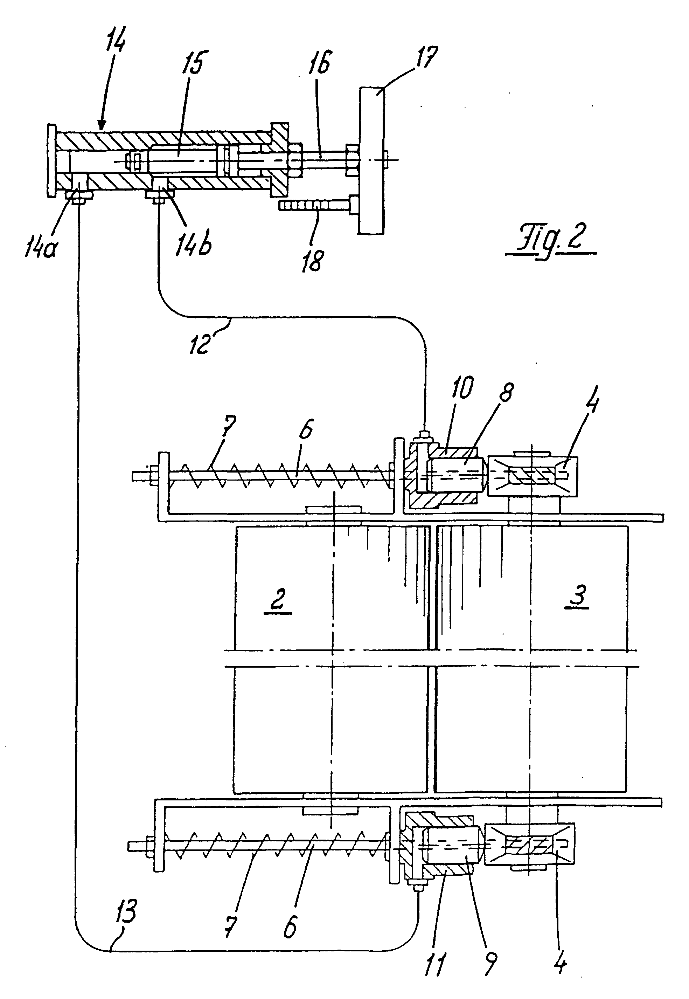

Wie sich aus der Fig. 2 ergibt, enthält die Mehrkammerpumpe 14 in diesem Falle zwei Kammern mit unterschiedlichen Durchmessern. Die Anzahl der Kammern der Mehrkammerpumpe richtet sich nach der Anzahl der angeschlossenen Zylinder 10, 11. Die einzelnen Kammern sind jedoch durchgehend, da in der Mehrkammerpumpe 14 ein Kolben 15 verfahren wird, der entsprechend den Durchmessern der Kammern gestuft ist. Die Kammern und der Kolben 15 sind so ausgelegt, daß beim Verfahren des Kolbens 15 aus beiden Kammern die gleiche Menge des Fluid, vorzugsweise Hydrauliköl in die Zylinder 10, 11 gedrückt wird, oder daß beim Verfahren des Kolbens 15 in die entgegengesetzte Richtung die gleiche Menge des Fluids in die Kammern einströmen kann. Dadurch werden die beiden Stößel 8, 9 stets im Gleichlauf beziehungsweise synchron verfahren.

Gemäß der Fig. 2 wird der Kolben 15 von Hand verfahren, da er an einer Gewindespindel 16 angeordnet ist, die mittels eines Handrades 17 gedreht werden kann. Im dargestellten Ausführungsbeispiel ist an dem Handrad 17 eine als Anzeige 18 dienender Stab angeordnet, so daß man durch die Stellung des Stabes zu einer Stirnfläche der Mehrkammerpumpe 14 die Durchgangsweite zwischen den beiden Cräckerwalzen 2 und 3 erkennen kann. Entgegen der Darstellung könnte der Kolben 15 auch durch einen Stelltrieb, beispielsweise durch einen Elektromotor oder durch eine Kolbenzylindereinheit, verstellt werden. In nicht näher dargestellter Weise ist die Mehrkammerpumpe 14 in der Fahrerkabine der landwirtschaftlichen Erntemaschine installiert, so daß der Fahrer von dort aus die Verstellung der Cräckerwalzen 2, 3 vornehmen kann.

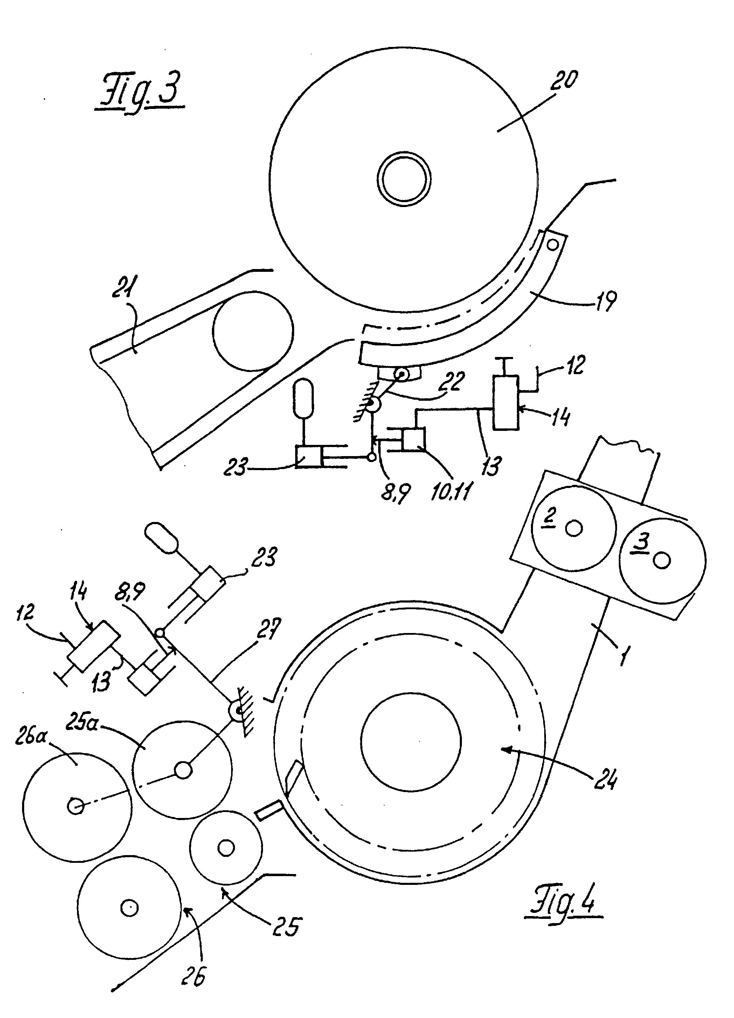

Die Fig. 3 zeigt die Verstellung eines Dreschkorbes 19 zu einer Dreschtrommel 20. Das zu dreschende Erntegut wird der Drescheinrichtung mittels eines Schrägförderers 21 zugeführt. An der Einlaufseite sind an dem Dreschkorb 19 an beiden Seiten zweiarmige Hebel 22 angelenkt. An den freien Enden der beiden zweiarmigen Hebel 22 sind Kraftspeicher in Form von Ausgleichszylindern 23 angeschlossen. Auf die freien Endbereiche der beiden zweiarmigen Hebel 22 wirken wiederum die Stößel 8, 9, die in gleicher Weise wie bei den Ausführungen nach den Fig. 1 und 2 in den Zylindern 10, 11 verschiebbar angeordnet sind.

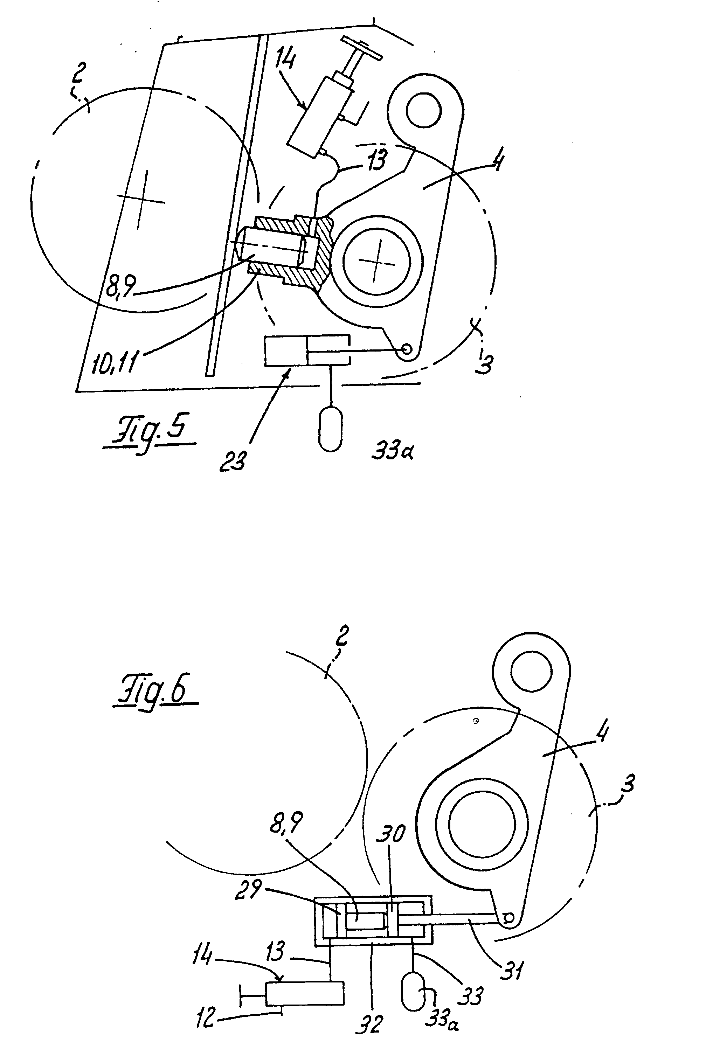

Bei der Ausführung nach der Fig. 4 sind einer Häckseleinrichtung 24 zwei Vorpreßwalzenpaare 25, 26 vorgeschaltet. Die oberen Walzen 25a und 26a sind beidseitig in zweiarmigen Hebeln 27 gelagert. Diese Hebel 27 sind als Winkelhebel ausgebildet. An das freie Ende jedes Hebels 27 ist entsprechend der Fig. 3 der Kraftspeicher in Form des Ausgleichzylinders 23 angeschlossen. Auf das zugeordnete Ende jedes Hebels 27 wirkt wiederum der Stößel 8 bzw. 9. An die Häckseleinrichtung 24 schließt sich der Förderkanal 1 an, in dem auch der vorgenannte Gehäuseblock 28 mit den Cräckerwalzen 2 uund 3 sowie ein nicht dargestellter Nachbeschleuniger montiert sind.

Die Ausführung nach der Fig. 5 entspricht im wesentlichen der Ausführung nach den Fig. 1 und 2. Allerdings sind bei dieser Ausführung die Zylinder 10, 11 an den schwenkbaren Schwingen 4 fest montiert, so daß sich die verfahrbaren Stößel 8, 9 an ortsfesten Teilen des Maschinengestells abstützen. In vereinfachter Ausführung sind die Hebel 6 und die Zugfedern 7 durch die beiden Ausgleichszylinder 23 mit ausgeschlossenem Druckspeicher ersetzt. Dadurch wird eine kostengünstige Lösung erreicht.

Die Ausführung nach der Fig. 6 entspricht im Hinblick auf die Anordnung der Cräckerwalzen 2, 3 den Ausführungen nach den Fig. 1, 2 und 5, jedoch sind in Abweichung von der Ausführung nach der Fig. 5 die Zylinder 10, 11, die Stößel 8, 9 und der Ausgleichszylinder 23 in jeweils einem Zylinder 32 zusammengefaßt. Die Stößel 8, 9 sind an Kolben 29 angeordnet, wobei die Stößel 8, 9 zu den Schwingen 4 zeigen. Die Stößel 8, 9 kontaktieren einen weiteren Kolben 30, an dem jeweils eine Kolbenstange 31 befestigt ist. Die Kolbenstange 31 greift an der zugehörigen seitlichen Schwinge 4 an. Jeder Kolben 29 und 30 sowie der jeweilige Stößel 8 oder 9 sind in einem gemeinsamen Zylinder 32 angeordnet. An der der Schwinge 4 abgewandten Seite ist der Anschluß für die Druckleitung 12 oder 13 vorgesehen. An dem der Schwinge zugewandten Seite ist der Anschluß für eine weitere Druckleitung 33 vorgesehen, wobei das Druckmedium aus einem Druckspeicher 33a strömt. Dieser Druck ist so gewählt, daß im Normalbetriebszustand durch den Kolben 30 ein bestimmter Druck auf den Stößel 8 oder 9 wirkt. Durch Verstellung des Kolbens 15 wird je nach dessen Verschieberichtung auch der Kolben 29 entsprechend verfahren, so daß dadurch die Weite geändert wird.

Die Erfindung ist nicht auf die dargestellten Ausführungsbeispiele beschränkt. Wesentlich ist, daß zwei oder mehr Verstellaggregate durch eine einzige Mehrkammerpumpe 14 verstellt werden, in dem in einem Zylinder 10, 11 verschiebbare Stößel 8, 9 verfahren werden. Als Fluid kommt vorzugsweise Hydrauliköl in Betracht.

### Bezugszeichenliste

- 1: Förderkanal
- 2: Cräckerwalze
- 3: Cräckerwalze
- 4: Schwingen
- 5: horizontale Achse
- 6: Hebel
- 7: Zugfeder
- 8: Stößel
- 9: Stößel
- 10: Zylinder
- 11: Zylinder
- 12: Druckleitung
- 13: Druckleitung
- 14: Mehrkammerpumpe
- 14a: Anschluß
- 14b: Anschluß
- 15: Kolben
- 16: Gewindespindel
- 17: Handrad
- 18: Anzeige
- 19: Dreschkorb
- 20: Dreschtrommel
- 21: Schrägförderer
- 22: Hebel
- 23: Ausgleichszylinder
- 24: Häckseleinrichtung
- 25: Walzenpaar
- 25a: Walze
- 26: Walzenpaar
- 26a: Walze
- 27: Hebel
- 28: Gehäuseblock
- 29: Kolben
- 30: Kolben
- 31: Kolbenstange
- 32: Zylinder
- 33: Druckleitung
- 33a: Druckspeicher

## Patentansprüche

1. Verstelleinrichtung einer landwirtschaftlichen Erntemaschine für innerhalb einer Förderstrecke zusammenwirkende Maschinenteile und/oder Baugruppen, von denen wenigstens ein Maschinenteil bzw. eine Baugruppe mittels Kraftspeichern (7, 23, 33a) der Verstelleinrichtung durch verstellbare Anschläge der Verstelleinrichtung zur Veränderung der Durchgangsweiten bzw. Öffnungen für das Erntegut positioniert ist,
**dadurch gekennzeichnet, dass**
die Anschläge durch ein Fluid beaufschlagbare und im Gleichlauf bewegbare in Zylindern (10, 11) geführte Stößel (8, 9) sind, und dass die Steuerung des den Zylindern (10, 11) zuführbaren Fluids durch eine einzige mit den Zylindern (10, 11) strömungsfähig verbundene, mit einem Kolben (15) ausgerüstete Mehrkammerpumpe (14) erfolgt, wobei die Anzahl der Kammern der Mehrkammerpumpe (14) mit der Anzahl der zu steuernden Zylinder (10, 11) übereinstimmt, und dass der Kolben (15) derart stufenförmig ausgebildet ist, dass beim Verfahren des Kolbens (15) stets die gleiche Menge des Fluids aus den Kammern aus- bzw. einströmt.

2. Verstelleinrichtung nach Anspruch 1,
**dadurch gekennzeichnet, daß** der Kolben (15) der Mehrkammerpumpe (14) von Hand oder durch einen Stelltrieb verstellbar ist.

3. Verstelleinrichtung nach Anspruch 2,
**dadurch gekennzeichnet, daß** der Stelltrieb ein elektromotorischer Antrieb, eine gesteuerte Kolbenzylindereinheit oder dergleichen ist.

4. Verstelleinrichtung nach einem oder mehreren der vorhergehenden Ansprüche 1 bis 3,
**dadurch gekennzeichnet, daß** die Mehrkammerpumpe (14) in der Fahrerkabine der landwirtschaftlichen Erntemaschine installiert ist und mit einer Anzeige (18) für die Größe der Durchgangsweite beziehungsweise -öffnung ausgerüstet ist.

5. Verstelleinrichtung nach einem oder mehreren der Ansprüche 1 bis 3,
**dadurch gekennzeichnet, daß** die Mehrkammerpumpe (14) an dem mit den Cräckerwalzen (2, 3) ausgerüsteten Gehäuseblock (28) installiert ist und mit diesem eine Baueinheit bildet.

6. Verstelleinrichtung nach einem oder mehreren der vorhergehenden Ansprüche 1 bis 5,
**dadurch gekennzeichnet, daß** die die Stößel (8, 9) aufnehmenden Zylinder (10, 11) an ortsfesten Bauteilen der landwirtschaftlichen Erntemaschine angeordnet sind, und daß die Stößel (8, 9) auf die verstellbaren Maschinenteile oder Baugruppen direkt oder indirekt einwirken.

7. Verstelleinrichtung nach einem oder mehreren der vorhergehenden Ansprüche 1 bis 5,
**dadurch gekennzeichnet, daß** die die Stößel (8, 9) aufnehmenden Zylinder (10, 11) an den verstellbaren Maschinenteilen (3) oder Baugruppen angeordnet sind, und daß die Stößel (8, 9) auf ortsfeste Bauteile der landwirtschaftlichen Erntemaschine einwirken.

8. Verstelleinrichtung nach einem oder mehreren der vorhergehenden Ansprüche 1 bis 7,
**dadurch gekennzeichnet, daß** die Kraftspeicher Zugfedern (7), Druckfedern oder Ausgleichszylinder (23) sind.

9. Verstelleinrichtung nach einem oder mehreren der vorhergehenden Ansprüche 1 bis 8,
**dadurch gekennzeichnet, daß** die Stößel (8, 9) auf zweiarmige Hebel (22) wirken, daß an jedem Hebel (22) an einem Ende das zu verstellende Maschinenteil (19, 25, 26) oder die Baugruppe angeschlossen ist, und daß am anderen Ende jedes Hebels (22, 29) oder am anderen Endbereich Federn oder der Ausgleichszylinder (23) angeschlossen ist.

10. Verstelleinrichtung nach einem oder mehreren der vorhergehenden Ansprüche 1 bis 9,
**dadurch gekennzeichnet, daß** die Stößel (8, 9) in geschlossenen Zylindern angeordnet sind und mit Verstellkolben (30) zusammenwirken, an denen Kolbenstangen (31) befestigt sind, deren andere Enden an dem zu verstellenden Maschinenteil (3) oder an der Baugruppe angelenkt sind.

11. Verstelleinrichtung nach einem oder mehreren der vorhergehenden Ansprüche 1 bis 10,
**dadurch gekennzeichnet, daß** die Verstelleinrichtung als hydraulische Verstelleinheit ausgebildet ist und mit Befüllverschraubungen und Entlüftungsöffnungen versehen ist.

## Claims

1. Adjustment apparatus of an agricultural harvesting machine for machine part and/or elements interacting inside a conveyance section, of which at least one machine part or one element is positioned by means of accumulators (7, 23, 33a) of the adjustment apparatus by adjustable stops of the adjustment apparatus for changing the passage widths or openings for the harvested crops,
**characterized in that**
the stops are strikers (8, 9) that are acted on by a fluid, are synchronously movable and guided in cylinders (10, 11), and **in that** the control of the fluid which can be supplied to the cylinders (10, 11) takes place through a single multi-chambered pump (14) connected so as to be capable of flow to the cylinders (10, 11) and provided with a piston (15), the number of chambers of the multi-chambered pump (14) matching the number of cylinders (10, 11) to be controlled, and **in that** the piston (15) is stepped such that, during operation of the piston (15), the same amount of fluid always flows out of or into the chambers.

2. Adjustment apparatus according to claim 1,
**characterized in that** the piston (15) of the multi-chambered pump (14) can be adjusted manually or by a servo drive.

3. Adjustment apparatus according to claim 2,
**characterized in that** the adjustment drive is an electromotive drive, a controlled piston cylinder unit or the like.

4. Adjustment apparatus according to one or more of the previous claims 1 to 3,
**characterized in that** the multi-chambered pump (14) is installed in the driver's cabin of the agricultural harvesting machine and is provided with a display (18) showing the size of the passage width or opening.

5. Adjustment apparatus according to one or more of claims 1 to 3,
**characterized in that** the multi-chambered pump (14) is installed on the housing block (28) provided with the cracker rolls (2, 3) and forms a structural unit with it

6. Adjustment apparatus according to one or more of the previous claims 1 to 5,
**characterized in that** the cylinders housing the strikers (8, 9) are arranged on stationary components of the agricultural harvesting machine, and **in that** the strikers (8, 9) act directly or indirectly on the adjustable machine parts or elements.

7. Adjustment apparatus according to one or more of the previous claims 1 to 5,
**characterized in that** the cylinders (10, 11) housing the strikers (8, 9) are arranged on the adjustable machine parts (3) or elements, and **in that** the strikers (8, 9) act on stationary components of the agricultural harvesting machine.

8. Adjustment apparatus according to one or more of the previous claims 1 to 7,
**characterized in that** the accumulators are tension springs (7), compression springs or counterbalance cylinders (23).

9. Adjustment apparatus according to one or more of the previous claims 1 to 8,
**characterized in that** the strikers (8, 9) act on two-armed levers (22), **in that** the machine part (19, 25, 26) to be adjusted or the element is joined to each lever (22) at one end and **in that** at the other end of each lever (22, 29) or at the other end-area springs or the counterbalance cylinder (23) is attached.

10. Adjustment apparatus according to one or more of the previous claims 1 to 9,
**characterized in that** the strikers (8, 9) are arranged in closed cylinders and interact with adjusting pistons (30), to which piston rods (31) are fixed, the other ends of which are articulated to the machine part (3) to be adjusted or to the element.

11. Adjustment apparatus according to one or more of the previous claims 1 to 10,
**characterized in that** the Adjustment apparatus is developed as hydraulic adjustment unit and is provided with filling screw connections and vents.

## Revendications

1. Mécanisme de réglage d'une machine de récolte agricole pour des éléments de machine et/ou des organes qui coopèrent les uns avec les autres sur un trajet de transport, parmi lesquels au moins un élément de machine ou un organe est positionné à l'aide d'accumulateurs de force (7, 23, 33a) du mécanisme de réglage, par des butées réglables du mécanisme de réglage pour modifier la section de passage ou des ouvertures pour le produit de récolte, **caractérisé en ce que** les butées peuvent être commandées par un fluide et sont des poussoirs (8, 9) guidés dans des cylindres (10, 11) et déplacés en synchronisme, **en ce que** la commande du fluide envoyé aux cylindres (10, 11) a lieu par l'intermédiaire d'une pompe à chambres multiples (14) unique, munie d'un piston (15) qui communique sur le plan de l'écoulement avec les cylindres (10,11), le nombre de chambres de la pompe à chambres multiples (14) étant égal au nombre de cylindres (10,11) à commander, et **en ce que** le piston (15) est étagé. de telle sorte que, lors du déplacement du piston (15), il sorte ou entre toujours la même quantité de fluide de ou dans les chambres.

2. Mécanisme de réglage selon la revendication 1, **caractérisé en ce que** le piston (15) de la pompe à chambres multiples (14) peut être déplacé manuellement ou par un mécanisme de commande.

3. Mécanisme de réglage selon la revendication 2, **caractérisé en ce que** le servo-mécanisme.est un mécanisme d'entraînement à moteur électrique, une unité piston-cylindre commandée ou similaire.

4. Mécanisme de réglage selon une ou plusieurs des revendications 1 à 2 précédentes, **caractérisé en ce que** la pompe à chambres multiples (14) est installée dans la cabine de conduite de la machine de récolte agricole et est équipée d'un affichage (18) pour la valeur de la section de passage ou de l'ouverture.

5. Mécanisme de réglage selon une ou plusieurs des revendications 1 à 3 précédentes, **caractérisé en ce que** la pompe à chambres multiples (14) est installée sur le bloc carter (28) portant les rouleaux de broyage (2, 3) et forme une unité de construction avec celui-ci.

6. Mécanisme de réglage selon une ou plusieurs des revendications 1 à 5 précédentes, **caractérisé en ce que** les cylindres (10, 11) recevant les poussoirs (8, 9) sont disposés sur des organes stationnaires de la machine de récolte agricole, et **en ce que** les poussoirs (8, 9) agissent de manière directe ou indirecte sur les éléments de machine ou les organes réglables.

7. Mécanisme de réglage selon une ou plusieurs des revendications 1 à 5 précédentes, **caractérisé en ce que** les cylindres (10, 11) recevant les poussoirs (8, 9) sont disposés sur les éléments de machine (3) ou les organes réglables et **en ce que** les poussoirs (8, 9) agissent sur des organes stationnaires de la machine de récolte agricole.

8. Mécanisme de réglage selon une ou plusieurs des revendications 1 à 7 précédentes, **caractérisé en ce que** les accumulateurs de force sont des ressorts de traction (7), des ressorts de compression ou des vérins-compensateurs (23).

9. Mécanisme de réglage selon une ou plusieurs des revendications 1 à 8 précédentes, **caractérisé en ce que** les poussoirs (8, 9) agissent sur des leviers (22) à deux bras, **en ce que** sur chaque levier (22), l'élément de machine (19, 25, 26) ou l'organe à régler est relié à une extrémité et **en ce qu'**à l'autre extrémité de chaque levier (22, 29) ou à l'autre partie d'extrémité sont reliés des ressorts ou le vérin-compensateur (23).

10. Mécanisme de réglage selon une ou plusieurs des revendications 1 à 9 précédentes, **caractérisé en ce que** les poussoirs (8, 9) sont montés dans des cylindres fermés et coopèrent avec des pistons de réglage (30) auxquels sont fixées des tiges de piston (31), dont l'autre extrémité est articulée sur l'élément de machine (3) ou sur l'organe à régler.

11. Mécanisme de réglage selon une ou plusieurs des revendications 1 à 10 précédentes, **caractérisé en ce que** le mécanisme de réglage est conformé en unité de réglage hydraulique et est pourvu de raccords de remplissage et d'ouvertures de dégazage.
